# EUROPÄISCHE PATENTSCHRIFT

(11) **EP 0 672 518 B1**
(45) Veröffentlichungstag und Bekanntmachung des Hinweises auf die Patenterteilung: **08.04.1998**
(21) Anmeldenummer: 94120987.6
(22) Anmeldetag: 31.12.1994
(51) Int. Cl.: B29C 70/50, B29C 70/20, B29C 47/00

(54) **Aus thermoplastischem Kunststoff stranggepresstes Kunststoffprofil**
Extruded thermoplastic profile
Profilé extrudé en polymère thermoplastique

(30) Priorität: 18.03.1994 DE 4409314
(43) Veröffentlichungstag der Anmeldung: 20.09.1995
(73) Patentinhaber: Technoform Caprano + Brunnhofer oHG, 34277 Fuldabrück (DE)
(72) Erfinder: Brunnhofer, Erwin, D-34277 Fuldabrück (DE)
(74) Vertreter: Honke, Manfred, Dr.-Ing.

(56) Entgegenhaltungen:
- EP-A- 0 468 306
- DE-A- 3 801 574
- US-A- 3 666 847
- US-A- 4 056 591
- US-A- 5 273 819

## Beschreibung

Die Erfindung betrifft ein aus thermoplastischem Kunststoff stranggepreßtes, auf Zug, Druck, Biegung und stabilitätsmäßig beanspruchbares Kunststoffprofil. Strangpressen meint insbesondere Extrudieren mit Hilfe einer Kunststoffschneckenpresse.

Die bekannten Kunststoffprofile, von denen die Erfindung ausgeht, besitzen für einen vorgegebenen Werkstoff eine bestimmte Härte und einen bestimmten Elastizitätsmodul. Härte und Elastizitätsmodul sind zahlenmäßige Parameter, die für den eingesetzten Werkstoff und für das Kunststoffprofil typisch sind, - solange eine Bewehrung mit Glasfasern und/oder Kohlefasern und/oder Metallfasern nicht eingebaut wird. Allerdings sind auch Kunststoffprofile bekannt, bei denen die mechanischen Parameter durch eine Faserbewehrung, z. B. aus Glas- , Kohlenstoff- oder Metallfasern, verbessert sind. Dabei wird mit Kurzfasern, Faserlänge unter 0,3 mm, gearbeitet. Die Faserbewehrung bewirkt eine für verschiedene Zwecke positive, für andere Zwecke störende Erhöhung der Härte und des Elastizitätsmoduls. In vielen Fällen, z. B. zum Verbund des Kunststoffprofils mit anderen Bauteilen, ist die Erhöhung des Elastizitätsmoduls zwar erwünscht, die Erhöhung der Härte kann jedoch Probleme produzieren, z. B. in bezug auf die Dauerfestigkeit des Verbundes.

Der Erfindung liegt das technische Problem zugrunde, ein Kunststoffprofil aus thermoplastischem Kunststoff zu schaffen, welches sich durch einen hohen Elastizitätsmodul ohne störende Härte auszeichnet und Fehlstellen in Form von Singularitäten in der Verteilung der physikalischen Parameter nicht mehr aufweist.

Zur Lösung dieses Problems ist Gegenstand der Erfindung ein aus thermoplastifiziertem Kunststoff stranggepreßtes, auf Zug, Druck, Biegung und stabilitätsmäßig beanspruchbares Kunststoffprofil, welches die folgenden Merkmale aufweist:
a) das Kunststoffprofil besitzt eine Langfaserbewehrung aus Glasfasern, Kohlenstoffasern, Metallfasern oder Mischungen davon, Faserlänge zumindest 3 mm,
b) die Langfaserbewehrung in dem Kunststoffprofil macht 10 bis 45 Masse% aus,
c) das Kunststoffprofil ist mit Hilfe des Kühldüsenextrusionsverfahrens stranggepreßt,
d) der Strangpreßvorgang ist so geführt worden, daß der Quotient aus der Wärmeausdehnung des Kunststoffprofils in Längsrichtung im Zähler und der Wärmeausdehnung des Kunststoffprofils in Querrichtung im Nenner größer ist als 0,3, und zwar im Temperaturbereich von 23 °C bis 125 °C,

wobei das Kunststoffprofil etwa die gleiche Härte aufweist, wie ein stranggepreßtes Vergleichsprofil gleicher Geometrie aus dem gleichen, jedoch bewehrungsfreien Kunststoff, und wobei der Elastizitätsmodul nach Maßgabe der gemäß Merkmal d) unterschiedlichen Wärmeausdehnungen in dem Kunststoffprofil um einen Faktor von 1,3 bis 1,8 größer ist als der des Vergleichsprofils. Vorzugsweise beträgt der Faktor etwa 1,5.

Das Kühldüsenextrusionsverfahren ist an sich bekannt (vgl. Michaeli "Extrusionswerkzeuge für Kunststoffe und Kautschuk, Hansa-Verlag 1991, S. 342 bis 345). Überraschenderweise führt die Kühldüsenextrusion nicht nur zu Profilquerschnitten mit extrem engen Toleranzen, sondern auch zu einer besonders dispersen Verteilung der Langfasern in dem Kunststoffprofil, sei es in Profillängsrichtung, sei es in Profilquerrichtung.

Erfindungsgemäß können die Langfasern in Form von Pellets dem zu extrudierenden Kunststoff beigegeben werden. Sie sind in den Pellets unter Verwendung eines Binders entwirrbar vereinigt und entwirren sich in dem Extruder. Wo bei einem besonderen Profil oder einem besonderen Kunststoff nicht mit solchen Pellets gearbeitet werden kann oder soll und nach bevorzugter Ausführungsform der Erfindung ist die Langfaserbewehrung im Wege der Direktverarbeitung von Endlosfasern eingebracht (vgl. Truckenmüller, IKT "Direktverarbeitung von Endlosfasern ..." und DE 40 16 784 C2, DE 42 36 662 A1). Der angegebene Quotient aus den Wärmeausdehnungen macht phänomenologisch eine Aussage über die Orientierung der Langfasern und ist ein Maß für die Anisotropie oder Homogenität der Wärmeausdehnung in dem Kunststoffprofil. Überraschenderweise ist der angegebene Zahlenwert eine gute Grenze, die sicherstellt, daß der Elastizitätsmodul eine beachtliche Erhöhung erfährt, die Härte sich jedoch nicht störend verändert. Vorzugsweise wird das Kunststoffprofil so eingerichtet, daß der angegebene Quotient aus den Wärmeausdehnungen > 0,3 beträgt. Das Merkmal, daß der Elastizitätsmodul in dem fertigen Kunststoffprofil nach Maßgabe der gemäß Merkmal d) unterschiedlichen Wärmeausdehnungen eingerichtet ist, bringt zum Ausdruck, daß der Elastizitätsmodul praktisch die gleiche Anisotropie aufweist.

Nach bevorzugter Ausführungsform der Erfindung besitzen die Fasern in der Langfaserbewehrung eine Länge von 3 bis 15 mm. Im Rahmen der Erfindung liegt es, die Langfaserbewehrung mit einer Beimischung von Fasern mit einer Länge von unter 3 mm zu versehen, wobei die Beimischung max. 30 Masse% der Gesamt-Faserbewehrung ausmacht. Im Rahmen der Erfindung liegt es fernerhin, den Kunststoff des Kunststoffprofils mit einer Beimischung von feinteiligen mineralischen Füllstoffen zu versehen, die in dem erfindungsgemäßen Kunststoffprofil ihre übliche Funktion erfüllen.

Bei dem erfindungsgemäßen Kunststoffprofil können die Fasern eine für Bewehrungsmaßnahmen in Kunststoffgegenständen und in anderen Gegenständen übliche Faserdicke aufweisen, wobei sich bewährt hat, daß die Fasern eine Dicke im Bereich von 5 bis 25 µm, vorzugsweise von etwa 12 µm, aufweisen.

Im Rahmen der Erfindung kann das Kunststoffprofil beliebige Wanddicken aufweisen. Besonders vorteilhaft ist die erfindungsgemäße Auslegung des Kunststoffprofils für Dünnwandprofile, die nur eine geringe Wanddicke besitzen, die beispielsweise 2,5 mm oder weniger beträgt.

Das erfindungsgemäße Kunststoffprofil kann aus den verschiedensten Werkstoffen aufgebaut sein. Bewährt haben sich die Werkstoffe, die im Patentanspruch 8 angegeben sind, oder Mischungen davon.

Ein erfindungsgemäßes Kunststoffprofil kann die angegebenen, für die Erfindung wesentlichen zahlenmäßigen Parameter über seine gesamte Erstreckung mit gleichen Zahlenwerten aufweisen. Die Zahlenwerte können aber auch bereichsweise unterschiedlich sein. Wird mit Glasfasern für die Langfaserbewehrung gearbeitet, so besteht die Möglichkeit, die Leitfähigkeit des Kunststoffprofils durch eine Beigabe von Kohlenstoff- und/oder Metallfasern zu beeinflussen. Die Oberflächen der erfindungsgemäßen Kunststoffprofile zeichnen sich durch geringe Rauhigkeit und große Glätte aus.

Um beim Extrudieren eines Profilstabes mit Faserbewehrung die Fasern zu orientieren, sind zahlreiche Maßnahmen bekannt, die auch zur Herstellung erfindungsgemäßer Isolierprofilstäbe eingesetzt werden können. Nur beispielsweise wird verwiesen auf das aus der DE 38 01 574 A1 bekannte Verfahren oder auf das sogenannte Monsanto-Verfahren.

## Patentansprüche

1. Aus thermoplastifiziertem Kunststoff stranggepreßtes, auf Zug, Druck, Biegung und stabilitätsmäßig beanspruchbares Kunststoffprofil, welches die folgenden Merkmale aufweist:
a) das Kunststoffprofil besitzt eine Langfaserbewehrung aus Glasfasern, Kohlenstoffasern, Metallfasern oder Mischungen davon, Faserlänge zumindest 3 mm,
b) die Langfaserbewehrung in dem Kunststoffprofil macht 10 bis 45 Masse% aus,
c) das Kunststoffprofil ist mit Hilfe des Kühldüsenextrusionsverfahrens stranggepreßt,
d) der Strangpreßvorgang ist so geführt worden, daß der Quotient aus der Wärmeausdehnung des Kunststoffprofils in Längsrichtung im Zähler und der Wärmeausdehnung des Kunststoffprofils in Querrichtung im Nenner größer ist als 0,3, und zwar im Temperaturbereich von 23 °C bis 125 °C,
wobei das Kunststoffprofil etwa die gleiche Härte aufweist, wie ein stranggepreßtes Vergleichsprofil gleicher Geometrie aus dem gleichen, jedoch bewehrungsfreien Kunststoff, und wobei der Elastizitätsmodul nach Maßgabe der gemäß Merkmal d) unterschiedlichen Wärmeausdehnungen in dem Kunststoffprofil um einen Faktor von 1,3 bis 1,8 größer ist als der des stranggepreßten Vergleichsprofils.

2. Kunststoffprofil nach Anspruch 1, wobei die Langfaserbewehrung im Wege der Direktverarbeitung von Endlosfasern eingebracht ist.

3. Kunststoffprofil nach einem der Ansprüche 1 oder 2, wobei die Langfasern in der Langfaserbewehrung eine Länge von 3 bis 15 mm aufweisen.

4. Kunststoffprofil nach einem der Ansprüche 1 bis 3, wobei die Langfaserbewehrung eine Beimischung von Fasern mit einer Länge von unter 3 mm aufweist, und zwar max. 30 Masse% der Gesamt-Faserbewehrung.

5. Kunststoffprofil nach einem der Ansprüche 1 bis 4, wobei der Kunststoff des Kunststoffprofils eine Beimischung von feinteiligen mineralischen Füllstoffen aufweist.

6. Kunststoffprofil nach einem der Ansprüche 1 bis 5, wobei die Fasern der Faserbewehrung eine Dicke im Bereich von 5 bis 25 µm, vorzugsweise von etwa 12 µm, aufweisen.

7. Kunststoffprofil nach einem der Ansprüche 1 bis 6, wobei das Kunststoffprofil eine Wanddicke aufweist, die 2,5 mm oder weniger beträgt.

8. Kunststoffprofil nach einem der Ansprüche 1 bis 7, wobei der thermoplastische Kunststoff aus einem Werkstoff der Gruppe "Polyamid, Polypropylen" oder Mischungen davon oder aus einem Werkstoff der Gruppe "Polyethylenterephthalat" oder der Gruppe "Polybutylenterephthalat" oder Mischungen davon besteht.

## Claims

1. A synthetic material section which is extruded from thermally plasticised synthetic material, which as regards its stability can be stressed in tension, in compression or in bending, and which has the following features:
a) the synthetic material section has a long fibre reinforcement comprising glass fibres, carbon fibres, metal fibres or mixtures thereof, with a fibre length of at least 3 mm,
b) the long fibre reinforcement in the synthetic material section makes up 10 to 45 % of the weight,
c) the synthetic material section is extruded by means of the cooling die extrusion process,
d) the extrusion operation is conducted so that the quotient comprising the thermal expansion of the synthetic material profile in the longitudinal direction as the numerator and the thermal expansion of the synthetic material section in the transverse direction as the denominator is greater than 0.3 within the temperature range from 23°C to 125°C,
wherein the synthetic material section has about the same hardness as a comparison section of the same geometry which is extruded from the same synthetic material without reinforcement, and wherein the modulus of elasticity is higher than that of the extruded comparison section by a factor of 1.3 to 1.8, in accordance with the different thermal expansions according to feature d).

2. A synthetic material section according to claim 1, wherein the long fibre reinforcement is introduced by a route comprising the direct processing of continuous fibres.

3. A synthetic material section according to either one of claims 1 or 2, wherein the long fibres in the long fibre reinforcement have a length of 3 to 15 mm.

4. A synthetic material section according to any one of claims 1 to 3, wherein the long fibre reinforcement comprises an admixture of fibres with a length of less than 3 mm, up to a maximum of 30 % by weight of the total fibre reinforcement.

5. A synthetic material section according to any one of claims 1 to 4, wherein the synthetic material of the synthetic material section comprises an admixture of finely divided mineral fillers.

6. A synthetic material section according to any one of claims 1 to 5, wherein the fibres of the fibre reinforcement have a thickness within the range from 5 to 25 µm, preferably of about 12 µm.

7. A synthetic material section according to any one of claims 1 to 6, wherein the synthetic material section has a wall thickness which is 2.5 mm or less.

8. A synthetic material section according to any one of claims 1 to 7, wherein the thermoplastic synthetic material consists of a material of the polyamide and polypropylene group or mixtures thereof, or of a material from the polyethylene terephthalate group or of the polybutylene terephthalate group or mixtures thereof.

## Revendications

1. Profilé extrudé en matière plastique thermoplastifiée qui peut être sollicité en traction, en pression, en flexion et sur le plan de sa stabilité et qui présente les caractéristiques suivantes :
a) le profilé en matière plastique possède une armature de fibres longues constituée de fibres de verre, de fibres de carbone, de fibres métalliques ou de mélanges de ces fibres, d'une longueur de fibre d'au moins 3 mm,
b) l'armature de fibres longues dans le profilé en matière plastique représente de 10 à 45 % en poids,
c) le profilé en matière plastique est extrudé par un procédé d'extrusion à filière refroidie,
d) l'opération d'extrusion est conduite de façon que le quotient de la dilatation thermique du profilé en matière plastique dans le sens longitudinal, en numérateur, et de la dilatation thermique du profilé en matière plastique dans le sens transversal, en dénominateur, soit supérieur à 0,3 et ce, dans une plage de températures de 23 °C à 125 °C,
le profilé en matière plastique présentant sensiblement la même dureté qu'un profilé extrudé témoin de même géométrie réalisé dans la même matière plastique mais sans armature, et le module d'élasticité étant, selon les différences de dilatation thermique observées dans le profilé en matière plastique et définies au point d), supérieur d'un facteur de 1,3 à 1,8 à celui du profilé extrudé témoin.

2. Profilé en matière plastique selon la revendication 1, l'armature de fibres longues étant mise en place par traitement direct de fibres continues.

3. Profilé en matière plastique selon l'une des revendications 1 ou 2, les fibres longues de l'armature de fibres longues présentant une longueur de 3 à 15 mm.

4. Profilé en matière plastique selon l'une des revendications 1 à 3, l'armature de fibres longues comportant une addition de fibres d'une longueur inférieure à 3 mm et ce, dans une proportion maximale de 30 % en poids de l'armature totale en fibres.

5. Profilé en matière plastique selon l'une des revendications 1 à 4, la matière plastique du profilé en matière plastique comportant une addition de matières de charge minérales en particules fines.

6. Profilé en matière plastique selon l'une des revendications 1 à 5, les fibres de l'armature de fibres présentant une épaisseur comprise entre 5 et 25 µm et de préférence d'environ 12 µm.

7. Profilé en matière plastique selon l'une des revendications 1 à 6, le profilé en matière plastique présentant une épaisseur de paroi égale ou inférieure à 2,5 mm.

8. Profilé en matière plastique selon l'une des revendications 1 à 7, la matière thermoplastique étant constituée d'un matériau du groupe « polyamide, polypropylène » ou de mélanges de ces composants, ou d'un matériau du groupe « polyéthylène téréphtalate » ou du groupe «polybutylène téréphtalate» ou de mélanges de ces composants.
